# EUROPÄISCHE PATENTSCHRIFT

(11) **EP 4 101 715 B1**
(45) Veröffentlichungstag und Bekanntmachung des Hinweises auf die Patenterteilung: **07.08.2024**
(21) Anmeldenummer: 22176876.5
(22) Anmeldetag: 01.06.2022
(51) Int. Cl.: B60W 30/18, B60Q 1/40

(54) **VERFAHREN ZUM BETREIBEN EINES FAHRERASSISTENZSYSTEMS EINES FAHRZEUGS UND FAHRZEUG**
VEHICLE AND METHOD FOR OPERATING A DRIVER ASSISTANCE SYSTEM OF A VEHICLE
PROCÉDÉ PERMETTANT DE FAIRE FONCTIONNER UN SYSTÈME D'AIDE À LA CONDUITE D'UN VÉHICULE ET VÉHICULE

(30) Priorität: 08.06.2021 DE 102021205766
(43) Veröffentlichungstag der Anmeldung: 14.12.2022
(73) Patentinhaber: VOLKSWAGEN AG, 38440 Wolfsburg (DE)
(72) Erfinder: Münning, Daniel, 38124 Braunschweig (DE); Detering, Stefan, 38110 Braunschweig (DE)

(56) Entgegenhaltungen:
- DE-A1- 102013 214 666
- DE-A1- 102014 203 854
- DE-A1- 102016 220 518
- DE-U1- 202005 001 753
- DE-U1- 202007 011 360
- US-A1- 2018 072 326
- US-B2- 9 701 241

## Beschreibung

Die Erfindung betrifft ein Verfahren zum Betreiben eines Fahrerassistenzsystems eines Fahrzeugs, bei welchem das Fahrerassistenzsystem einen Fahrstreifenwechsel des Fahrzeugs bewirkt. Bei dem Verfahren aktiviert ein Fahrer des Fahrzeugs einen Fahrtrichtungsanzeiger des Fahrzeugs. Des Weiteren betrifft die Erfindung ein Fahrzeug mit einem Fahrerassistenzsystem.

Die US 2019/0061780 A1 beschreibt ein Verfahren zum Betreiben eines Fahrerassistenzsystems, bei welchem Navigationsinformationen genutzt werden. Wenn festgestellt wird, dass das Fahrzeug nicht einer Navigationsroute folgt und hierbei an einer Ausfahrt eine Autobahn verlässt, sondern stattdessen auf der Autobahn bleibt, werden andere Funktionen aktiviert als beim Abfahren von der Autobahn an der Ausfahrt. Wenn das Fahrzeug nämlich auf der Autobahn bleibt, werden eine Geschwindigkeitsregelung und ein Fahrstreifenwechselassistent aktiviert. Des Weiteren wird in diesem Fall ein Ausfahrtsassistent deaktiviert, welcher dazu ausgebildet ist, eine Verringerung der Fahrgeschwindigkeit auf der Ausfahrt zu bewirken.

Die DE 20 2005 001 753 U1 beschreibt automatisch abschaltende Fahrtrichtungsanzeiger für Kraftfahrzeuge. Die automatische Abschaltung findet nach einer definierten Blinkdauer statt, falls während dieser Zeit kein Geschwindigkeitsabfall um einen bestimmten Wert gemessen wurde (Spurwechsel, Überholen). Falls stattdessen während dieser Blinkdauer der Geschwindigkeitsabfall eintritt (bevorstehender Abbiegevorgang), erfolgt die Abschaltung nach anschließendem, definiertem Geschwindigkeitsanstieg (Kurvenende).

Die US 2018/072326 A1 beschreibt ein autonomes Fahrsystem, das einen Betriebszustand eines Fahrzeugs aufgrund einer Aktion eines Fahrers vom autonomen Fahren auf manuelles Fahren umschaltet. Das Fahrsystem weist eine elektronische Steuereinheit auf, die dafür ausgelegt ist zu bestimmen, ob eine Abschaltbedingung erfüllt ist, wenn beim autonomen Fahren ein Blinker in einem eingeschalteten Zustand ist und die Aktion des Fahrers durchgeführt wird.

Die DE 10 2013 214 666 A1 beschreibt eine Unterstützung eines Fahrers beim Signalisieren eines Fahrtrichtungswechsels. Hierbei wird ein vom Fahrer aktiviertes Fahrrichtungswechselsignal deaktiviert, wenn unter Berücksichtigung eines mittels einer Kamera erkannten Fahrspurverlaufs ermittelt wird, dass ein vom Fahrer gewünschtes Fahrtrichtungswechselmanöver abgeschlossen ist.

Des Weiteren beschreibt die US 2020/0164871 A1 ein Fahrstreifenwechsel-Assistenzsystem, welches an einer Autobahnausfahrt einen assistierten Fahrstreifenwechsel unterbindet, wenn sich auf einem weiteren Fahrstreifen der Autobahnausfahrt ein weiteres Fahrzeug befindet.

Aufgabe der vorliegenden Erfindung ist es, ein Verfahren der eingangs genannten Art zu schaffen, welches einen verbreiterten Einsatzbereich für einen assistierten Fahrstreifenwechsel mit sich bringt, und ein zur Durchführung des Verfahrens ausgebildetes Fahrzeug anzugeben.

Diese Aufgabe wird durch ein Verfahren mit den Merkmalen des Patentanspruchs 1 und ein Fahrzeug mit den Merkmalen des Patentanspruchs 10 gelöst. Vorteilhafte Ausgestaltungen mit zweckmäßigen Weiterbildungen der Erfindung sind den abhängigen Patentansprüchen und in der nachfolgenden Beschreibung angegeben.

Bei dem erfindungsgemäßen Verfahren zum Betreiben eines Fahrerassistenzsystems eines Fahrzeugs, bei welchem das Fahrerassistenzsystem einen Fahrstreifenwechsel des Fahrzeugs bewirkt, aktiviert der Fahrer des Fahrzeugs einen Fahrtrichtungsanzeiger des Fahrzeugs. Bei dem Verfahren wird von dem Fahrerassistenzsystem zwischen einem Fahrstreifenwechsel einer ersten Art, bei welchem ein Abfahren des Fahrzeugs von einem Ausgangsfahrstreifen auf einen weiteren Fahrstreifen vorgesehen ist, und einem Fahrstreifenwechsel einer zweiten Art unterschieden. Bei dem Fahrstreifenwechsel der zweiten Art ist ein Abfahren des Fahrzeugs von einem Ausgangsstreifen auf einen Zweig einer Abzweigung vorgesehen. Bei einem Erkennen eines beabsichtigten Fahrstreifenwechsels der zweiten Art wird eine längere Zeitspanne eines Blinkens des Fahrtrichtungsanzeigers zugelassen als bei einem Erkennen eines beabsichtigten Fahrstreifenwechsels der ersten Art.

Mit anderen Worten ermöglicht es das Verfahren dem Fahrer des Fahrzeugs, den Fahrtrichtungsanzeiger besonders frühzeitig zu betätigen, wenn der Fahrer beabsichtigt, von dem Fahrerassistenzsystem den Fahrstreifenwechsel der zweiten Art vornehmen zu lassen. Dadurch können in einer derartigen Situation, bei welcher das Fahrzeug von dem Ausgangsfahrstreifen auf den Zweig der Abzweigung abfahren wird, weitere Verkehrsteilnehmer sehr frühzeitig über diese Absicht des Fahrers informiert werden.

Dem Verfahren liegt die Erkenntnis zugrunde, dass ein querführendes beziehungsweise für eine Querführung des Fahrzeugs ausgebildetes Fahrerassistenzsystem, welches zum Bewirken eines assistierten Fahrstreifenwechsels ausgebildet ist, regulatorischen Rahmenbedingungen unterliegt. Derartige regulatorische Rahmenbedingungen sind beispielsweise in der UN ECE-Regelung mit der Kennung R79, also in der UN ECE R79 festgehalten oder angegeben. Gemäß der UN ECE R79 hat bei einem assistierten Fahrstreifenwechsel, also bei einem von einem querführenden Fahrerassistenzsystem bewirkten Fahrstreifenwechsel, das Fahrmanöver, bei welchem das Fahrzeug beginnt, den Ausgangsfahrstreifen zu verlassen und auf den weiteren Fahrstreifen abzubiegen, innerhalb einer vergleichsweise kurzen Zeitspanne nach einem Betätigen oder Aktivieren des Fahrtrichtungsanzeigers zu erfolgen.

Konkret ist in der UN ECE R79 vorgeschrieben, dass innerhalb von 3 Sekunden bis 5 Sekunden nach dem Aktivieren des Fahrtrichtungsanzeigers das Manöver des Fahrstreifenwechsels initiiert sein muss. Dementsprechend muss innerhalb dieser Zeitspanne damit begonnen werden, eine Fahrbahnmarkierung zu überfahren, welche den Ausgangsfahrstreifen von dem weiteren Fahrstreifen abgrenzt. Diese Vorgaben sind durchaus vorteilhaft, wenn lediglich der Fahrstreifenwechsel der ersten Art durchgeführt werden soll, also wenn lediglich das Abfahren des Fahrzeugs von dem Ausgangsfahrstreifen auf den weiteren Fahrstreifen vorgesehen ist.

Jedoch lassen sich diese Vorgaben nicht zufriedenstellend auf den Fahrstreifenwechsel der zweiten Art anwenden, bei welchem das Fahrzeug von dem Ausgangsfahrstreifen auf den Zweig der Abzweigung abfährt. Denn bei dem Fahrstreifenwechsel der zweiten Art ist es vorteilhaft, wenn bereits deutlich vor dem Beginn des Fahrmanövers, bei welchem das Fahrzeug beginnt, den Ausgangsfahrstreifen zu verlassen und auf den Zweig der Abzweigung abzubiegen, der Fahrtrichtungsanzeiger betätigt oder aktiviert wird, um die weiteren Verkehrsteilnehmer frühzeitig auf das bevorstehende Fahrmanöver in Form des Fahrstreifenwechsels der zweiten Art hinzuweisen.

Indem das Fahrerassistenzsystem dazu ausgebildet ist, zwischen dem Fahrstreifenwechsel der ersten Art und dem Fahrstreifenwechsel der zweiten Art zu unterscheiden und beim Erkennen des beabsichtigten Fahrstreifenwechsels der zweiten Art die längere Zeitspanne des Blinkens des Fahrtrichtungsanzeigers zuzulassen, wird diesem Umstand besonders gut Rechnung getragen. Daher bringt das Verfahren einen verbreiterten Einsatzbereich für einen assistierten Fahrstreifenwechsel mit sich. Denn es lässt sich der von dem Fahrerassistenzsystem bewirkte und somit assistierte Fahrstreifenwechsel auch dann umsetzen, wenn der Fahrer des Fahrzeugs auf den Zweig der Abzweigung abzufahren beabsichtigt. Somit kann auch in einer solchen Fahrsituation dem Fahrer des Fahrzeugs der assistierte Fahrstreifenwechsel angeboten werden.

Insbesondere kann der Fahrer des Fahrzeugs sehr frühzeitig, beispielsweise bereits einige hundert Meter vor der Abzweigung, den Fahrtrichtungsanzeiger betätigen, um das von ihm gewünschte Manöver in Form des Fahrstreifenwechsels der zweiten Art anzuzeigen, welches dann von dem Fahrerassistenzsystem bewirkt wird. Und auch der Fahrstreifenwechsel der ersten Art, bei welchem vergleichsweise kurz nach dem Betätigen oder Aktivieren des Fahrtrichtungsanzeigers durch den Fahrer der Fahrstreifenwechsel oder Spurwechsel auch tatsächlich vorzunehmen ist, kann weiterhin in Übereinstimmung mit regulatorischen Rahmenbedingungen wie etwa der UN ECE R79 durchgeführt beziehungsweise vorgenommen werden.

Der Fahrstreifenwechsel der zweiten Art kann insbesondere an einer Abzweigung durchgeführt werden, welche nach Art einer Gabelung ausgebildet ist, bei welcher also der von dem Fahrzeug nach dem Fahrstreifenwechsel befahrene Zweig als einer von wenigstens zwei Zweigen der Gabelung ausgebildet ist. Des Weiteren kann der Zweig der Abzweigung nach Art einer Ausfahrt oder Abfahrt von dem Ausgangsfahrstreifen ausgebildet sein. Bei allen derartigen Ausgestaltungen der Abzweigung ist es vorteilhaft, wenn durch das Zulassen der längeren Zeitspanne des Blinkens des Fahrtrichtungsanzeigers die weiteren Verkehrsteilnehmer und insbesondere die Verkehrsteilnehmer des rückwärtigen Verkehrs sehr frühzeitig auf das bevorstehende Abfahren des Fahrzeugs von dem Ausgangsfahrstreifen und somit auf das Abbiegen auf den Zweig der Abzweigung hingewiesen beziehungsweise über dieses Abbiegen in Kenntnis gesetzt werden.

Vorzugsweise bewirkt das Fahrerassistenzsystem, dass zumindest ein Teilbereich des Fahrzeugs im Anschluss an die Zeitspanne bei weiterhin blinkendem Fahrtrichtungsanzeiger den Ausgangsfahrstreifen verlässt. So kann bei dem assistierten Fahrstreifenwechsel einerseits ein sehr kontinuierliches Fahrmanöver durchgeführt werden. Dies gilt insbesondere, wenn zumindest der Teilbereich des Fahrzeugs den Ausgangsfahrstreifen unmittelbar im Anschluss an die Zeitspanne bei weiterhin blinkendem Fahrtrichtungsanzeiger verlässt. Und dennoch werden die weiteren Verkehrsteilnehmer auch während der Durchführung des Fahrmanövers durch den blinkenden Fahrtrichtungsanzeiger auf dieses Fahrmanöver hingewiesen.

Vorzugsweise erkennt das Fahrerassistenzsystem, dass bei beabsichtigtem Fahrstreifenwechsel der zweiten Art ein Abfahren des Fahrzeugs von dem Ausgangsfahrstreifen auf einen Verzögerungsstreifen einer als Ausfahrt ausgebildeten Abzweigung vorgesehen ist. Insbesondere in einer derartigen Fahrsituation, in welcher ein assistierter Fahrstreifenwechsel oder Spurwechsel auf den Verzögerungsstreifen vorgenommen werden soll, ist nämlich das rechtzeitige Anzeigen des beabsichtigten Fahrstreifenwechsels besonders vorteilhaft. Denn der Verzögerungsstreifen ermöglicht es zwar, erst auf diesem die Fahrgeschwindigkeit des Fahrzeugs zu verlangsamen.

Jedoch insbesondere wenn bereits vor dem Erreichen des Verzögerungsstreifens, also noch während der Fahrt auf dem Ausgangsfahrstreifen, welcher Teil einer Schnellstraße, insbesondere einer Autobahn, sein kann, die Fahrgeschwindigkeit des Fahrzeugs verringert wird, ist ein frühzeitiges Informieren der insbesondere rückwärtigen Verkehrsteilnehmer über das beabsichtigte Abfahren auf den Verzögerungsstreifen besonders vorteilhaft.

Vorzugsweise bewirkt das Fahrerassistenzsystem ein Abbiegen des Fahrzeugs auf den Verzögerungsstreifen, wenn ein Vorhandensein des Verzögerungsstreifens seitlich neben dem Fahrzeug festgestellt wird. Dadurch kann auf besonders verkehrssichere Art und Weise das Abbiegen auf den Verzögerungsstreifen vorgenommen werden, und es kann eine maximale Länge des Verzögerungsstreifens für ein anschließendes Verringern der Fahrgeschwindigkeit des Fahrzeugs genutzt werden.

Weiterhin ist es vorteilhaft, wenn das Vorhandensein des Verzögerungsstreifens seitlich neben dem Fahrzeug frühzeitig festgestellt wird, weil dann auch ein frühzeitiges Abbiegen des Fahrzeugs auf den Verzögerungsstreifen durch das Fahrerassistenzsystem bewirkt werden kann. Dadurch kann sehr einfach und wirkungsvoll vermieden werden, dass das Fahrzeug den Verkehr auf dem Ausgangsfahrstreifen behindert.

Wenn zusätzlich oder alternativ ein Vorhandensein des Verzögerungsstreifens in einer der Fahrtrichtung vorausliegenden Umgebung des Fahrzeugs frühzeitig festgestellt wird, so ist auch dies im Hinblick auf das Durchführen des Fahrstreifenwechsels der zweiten Art vorteilhaft. Denn so kann dieses Vorhandensein des Verzögerungsstreifens in Fahrtrichtung voraus frühzeitig bei dem assistierten Fahrstreifenwechsel berücksichtigt werden.

Das Vorhandensein des Verzögerungsstreifens in der in Fahrtrichtung vorausliegenden Umgebung des Fahrzeugs und/oder seitlich neben dem Fahrzeug kann mittels wenigstens eines Umfeldsensors des Fahrzeugs festgestellt werden. Beispielsweise kann hierfür wenigstens eine Kamera des Fahrzeugs genutzt werden, etwa in Form wenigstens einer Frontkamera des Fahrzeugs. Dies ermöglicht eine zuverlässige Erkennung des Verzögerungsstreifens.

Zusätzlich oder alternativ kann das Vorhandensein des Verzögerungsstreifens in der in Fahrtrichtung vorausliegenden Umgebung des Fahrzeugs und/oder seitlich neben dem Fahrzeug anhand von Kartendaten eines Navigationssystems des Fahrzeugs festgestellt werden. Insbesondere wird hierbei von dem Navigationssystem auch die jeweils aktuelle Position des Fahrzeugs berücksichtigt. Bei einer entsprechend hohen Genauigkeit der Kartendaten und der Positionsbestimmung des Fahrzeugs lässt sich auch auf diesem Wege das Vorhandensein des Verzögerungsstreifens sehr präzise feststellen.

Zusätzlich oder alternativ kann das Vorhandensein des Verzögerungsstreifens in der in Fahrtrichtung vorausliegenden Umgebung des Fahrzeugs und/oder seitlich neben dem Fahrzeug anhand von aus Schwarmdaten generierten Kartendaten festgestellt werden. Derartige Kartendaten sind üblicherweise hochgenau, so dass insbesondere eine fahrspurgenaue beziehungsweise fahrstreifengenaue Lokalisierung des Fahrzeugs bei einer Nutzung der aus den Schwarmdaten generierten Kartendaten ermöglicht ist.

Vorzugsweise stellt das Fahrerassistenzsystem anhand von Kartendaten fest, dass die Abzweigung in Fahrtrichtung vor dem Fahrzeug angeordnet ist. Auf diese Weise kann dieser Sachverhalt bei dem Erkennen genutzt werden, ob der Fahrer den assistierten Fahrstreifenwechsel der zweiten Art beabsichtigt oder den assistierten Fahrstreifenwechsel der ersten Art. Dies macht das Verfahren besonders zuverlässig.

Vorzugsweise wird von dem Fahrerassistenzsystem geprüft, ob ein Navigationssystem des Fahrzeugs aktiviert ist, welches eine Route zu einem Fahrziel des Fahrzeugs angibt. Bei aktiviertem Navigationssystem wird an den Fahrer ein Hinweis ausgegeben, vor einem Erreichen der Abzweigung den Fahrtrichtungsanzeiger zu aktivieren. Dadurch kann sichergestellt werden, dass durch das Blinken des Fahrtrichtungsanzeigers rechtzeitig vor dem Erreichen der Abzweigung die weiteren Verkehrsteilnehmer über den bevorstehenden Fahrstreifenwechsel der zweiten Art informiert beziehungsweise in Kenntnis gesetzt werden.

Dies ist im Hinblick auf eine besonders hohe Verkehrssicherheit bei dem Fahrstreifenwechsel der zweiten Art vorteilhaft.

Vorzugsweise verbleibt das Fahrerassistenzsystem in einem den Fahrstreifenwechsel der ersten Art zulassenden Betriebsmodus, wenn der Fahrer dem Hinweis nicht nachkommt. Dadurch kann insbesondere dem Umstand Rechnung getragen werden, dass der Fahrer möglicherweise nicht der Route zu dem Fahrziel zu folgen gewillt ist. In diesem Fall steht für den Fahrer dennoch der assistierte Fahrstreifenwechsel der ersten Art weiterhin zur Verfügung.

Der Hinweis kann an den Fahrer des Fahrzeugs deutlich vor dem tatsächlichen Erreichen der Abzweigung gegeben werden. Denn so bleibt dem Fahrer ausreichend Zeit, auf den Hinweis zu reagieren und dennoch rechtzeitig vor dem Erreichen der Abzweigung den Fahrtrichtungsanzeiger zu betätigen oder zu aktivieren.

Ein entsprechender Zeitpunkt, in welchem das Ausgeben des Hinweises vorgenommen werden kann, kann insbesondere in Abhängigkeit von einer Fahrgeschwindigkeit des Fahrzeugs festgelegt werden.

Vorzugsweise legt das Fahrzeug, bei welchem das Fahrerassistenzsystem den Fahrstreifenwechsel der zweiten Art vornimmt, während einer mindestens 5 Sekunden andauernden Zeitspanne des Blinkens auf dem Ausgangsfahrstreifen eine Fahrstrecke zurück, bevor das Fahrerassistenzsystem das Abfahren des Fahrzeugs von dem Ausgangsfahrstreifen auf den Zweig der Abzweigung bewirkt. Auf diese Weise kann dafür gesorgt werden, dass den weiteren Verkehrsteilnehmern, insbesondere den Verkehrsteilnehmern des rückwärtigen Verkehrs, das bevorstehende Manöver rechtzeitig und frühzeitig angezeigt wird. Denn es kann während dieser vergleichsweise langen Zeitspanne des Blinkens das bevorstehende Manöver von diesen Verkehrsteilnehmern erkannt werden.

Dies gilt insbesondere, wenn das Fahrzeug, bei welchem das Fahrerassistenzsystem den Fahrstreifenwechsel der zweiten Art vornimmt, während einer etwa 5 Sekunden bis etwa 15 Sekunden andauernden Zeitspanne des Blinkens auf dem Ausgangsfahrstreifen die Fahrstrecke zurücklegt und daran anschließend das Fahrerassistenzsystem das Abfahren des Fahrzeugs von dem Ausgangsfahrstreifen auf den Zweig der Abzweigung bewirkt.

Bei Fahrgeschwindigkeiten des Fahrzeugs, wie sie bei einer Fahrt auf einer Autobahn oder dergleichen Schnellstraße üblich sind, kann das Fahrzeug während der Zeitspanne des Blinkens eine Fahrstrecke einer Länge von beispielsweise zwischen etwa 100 Meter und etwa 500 Meter zurücklegen, bevor das Fahrerassistenzsystem das Abfahren des Fahrzeugs von dem Ausgangsfahrstreifen auf den Zweig der Abzweigung bewirkt.

Insbesondere kann das Fahrzeug, bei welchem das Fahrerassistenzsystem auf der Autobahn oder Schnellstraße den Fahrstreifenwechsel der zweiten Art vornimmt, während der Zeitspanne des Blinkens eine Fahrstrecke einer Länge zwischen etwa 200 Meter und etwa 400 Meter zurücklegen, bevor das Fahrerassistenzsystem das Abfahren des Fahrzeugs von dem Ausgangsfahrstreifen auf den Zweig der Abzweigung bewirkt. Dem liegt die Erkenntnis zugrunde, dass sich ein Anzeigen des gewünschten Abfahrens auf den Zweig der Abzweigung etwa 300 Meter vor der Abzweigung als besonders sinnvoll für ein frühzeitiges und verkehrssicheres Hinweisen auf das bevorstehende Manöver herausgestellt hat.

Bei niedrigeren Fahrgeschwindigkeiten des Fahrzeugs, wie sie insbesondere im Stadtverkehr auftreten können, kann das Fahrzeug während der mindestens 5 Sekunden andauernden Zeitspanne des Blinkens eine Fahrstrecke einer Länge von beispielsweise zwischen etwa 50 Meter und etwa 100 Meter zurücklegen. So kann auch in einer solchen Fahrsituation den, insbesondere rückwärtigen, Verkehrsteilnehmern das bevorstehende Manöver in Form des Fahrstreifenwechsels sehr frühzeitig angezeigt werden.

Das erfindungsgemäße Fahrzeug weist ein Fahrerassistenzsystem auf, welches dazu ausgebildet ist, einen Fahrstreifenwechsel des Fahrzeugs zu bewirken. Des Weiteren weist das Fahrzeug einen Fahrtrichtungsanzeiger auf, welcher von einem Fahrer des Fahrzeugs aktivierbar ist. Das Fahrerassistenzsystem ist dazu ausgebildet, zwischen einem Fahrstreifenwechsel einer ersten Art, bei welchem ein Abfahren des Fahrzeugs von einem Ausgangsfahrstreifen auf einen weiteren Fahrstreifen vorgesehen ist, und einem Fahrstreifenwechsel einer zweiten Art zu unterscheiden. Bei dem Fahrstreifenwechsel der zweiten Art ist ein Abfahren des Fahrzeugs von einem Ausgangsfahrstreifen auf einen Zweig einer Abzweigung vorgesehen. Das Fahrerassistenzsystem ist weiter dazu ausgebildet, bei einem Erkennen eines beabsichtigten Fahrstreifenwechsels der zweiten Art eine längere Zeitspanne eines Blinkens des Fahrtrichtungsanzeigers zuzulassen als bei einem Erkennen eines beabsichtigten Fahrstreifenwechsels der ersten Art. Auf diese Weise ermöglicht das Fahrerassistenzsystem des Fahrzeugs einen verbreiterten Einsatzbereich des assistierten Fahrstreifenwechsels. Denn das Fahrzeug ist zur Durchführung des erfindungsgemäßen Verfahrens ausgebildet.

Zu der Erfindung gehören auch Weiterbildungen des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: stark schematisiert eine Fahrsituation, bei welcher ein Fahrzeug einen assistierten Fahrstreifenwechsel einer ersten Art durchführt;
- Fig. 2: ebenso stark schematisiert eine Situation, in welcher das Fahrzeug einen Fahrstreifenwechsel einer zweiten Art durchführt, bei welchem das Fahrzeug von einem Ausgangsfahrstreifen auf einen Verzögerungsstreifen einer als Ausfahrt ausgebildeten Abzweigung abfährt;
- Fig. 3: die Situation gemäß Fig. 2, wobei zusätzlich Längenbereiche oder Abschnitte hervorgehoben sind, innerhalb welcher ein Blinken von Fahrtrichtungsanzeigern des Fahrzeugs vorgenommen werden kann, um das Abbiegen auf den Verzögerungsstreifen zu signalisieren; und
- Fig. 4: ein Ablaufdiagramm, gemäß welchem ein Fahrerassistenzsystem des Fahrzeugs zwischen dem Fahrstreifenwechsel der ersten Art gemäß Fig. 1 und dem Fahrstreifenwechsel der zweiten Art gemäß Fig. 2 unterscheiden kann, wobei bei einem beabsichtigten Fahrstreifenwechsel der zweiten Art eine längere Zeitspanne eines Blinkens des Fahrtrichtungsanzeigers zugelassen wird als dann, wenn der Fahrstreifenwechsel der ersten Art beabsichtigt ist.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

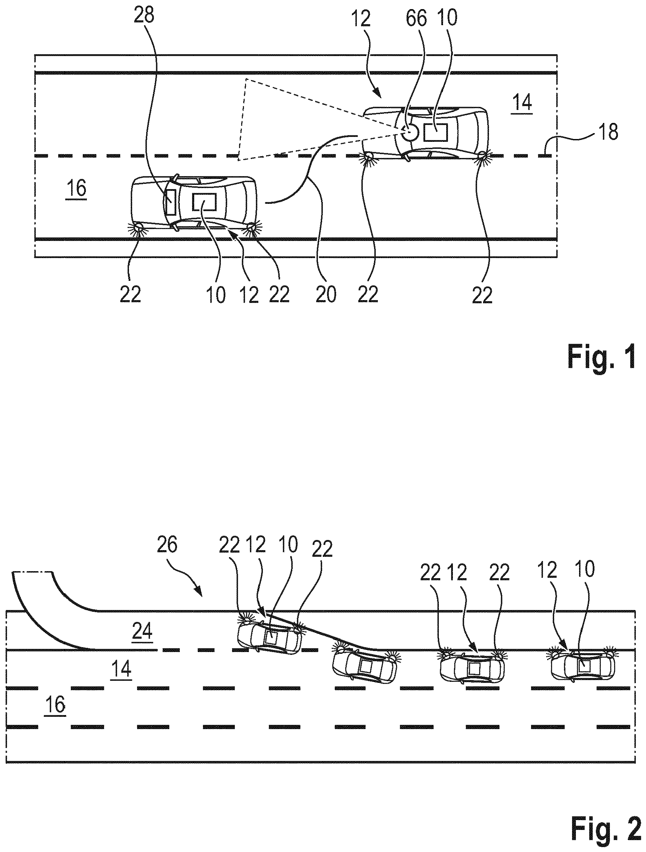

In Fig. 1 ist schematisch eine Situation gezeigt, in welcher ein Fahrerassistenzsystem 10 eines Fahrzeugs 12 einen assistierten Fahrstreifenwechsel einer ersten Art vornimmt beziehungsweise bewirkt. Das Fahrzeug 12 befindet sich hierbei auf einer Fahrbahn mit einem ersten Fahrstreifen in Form eines Ausgangsfahrstreifens 14, wobei die Fahrbahn einen weiteren Fahrstreifen in Form eines Zielfahrstreifens 16 aufweist. Der Ausgangsfahrstreifen 14 ist von dem Zielfahrstreifen 16 durch eine Fahrbahnmarkierung in Form einer gestrichelte Linie 18 beziehungsweise unterbrochenen Linie 18 abgegrenzt.

Das Fahrerassistenzsystem 10 des Fahrzeugs 12 kann den Fahrer des Fahrzeugs 12 sowohl durch eine Querführung als auch durch eine Längsführung unterstützen. Insbesondere ist das Fahrerassistenzsystem 10 dazu in der Lage, einen assistierten Fahrstreifenwechsel einer ersten Art durchzuführen, bei welchem das für die Querführung ausgebildete Fahrerassistenzsystem 10 das Abfahren des Fahrzeugs 12 von dem Ausgangsfahrstreifen 14 und das Verbringen des Fahrzeugs 12 auf den weiteren Fahrstreifen in Form des Zielfahrstreifens 16 bewirkt. Ein hierbei von dem Fahrzeug 12 befahrener Fahrweg 20 ist in Fig. 1 schematisch dargestellt.

Bei dem in Fig. 1 durch den Fahrweg 20 veranschaulichten Manöver des assistierten Fahrstreifenwechsels der ersten Art sind regulatorische Rahmenbedingungen zu beachten, welche beispielsweise in der Regelung UN ECE R79 festgehalten sind. Demgemäß kann ein (nicht gezeigter) Fahrer des Fahrzeugs 12 ein Bedienelement etwa in Form eines (nicht gezeigten) Blinkerhebels des Fahrzeugs 12 betätigen und so ein Blinken wenigstens eines Fahrtrichtungsanzeigers 22 des Fahrzeugs 12 bewirken. Die auf diese Weise aktivierten beziehungsweise blinkenden Fahrtrichtungsanzeiger 22 oder Blinker des Fahrzeugs 12 sind in Fig. 1 lediglich schematisch dargestellt.

Der wenigstens eine Fahrtrichtungsanzeiger 22 des Fahrzeugs 12 kann also insbesondere durch Betätigen des Bedienelements von dem Fahrer des Fahrzeugs 12 aktivierbar sein. Beispielsweise kann der Fahrer des Fahrzeugs 12 den (vorliegend nicht gezeigten) Blinkerhebel des Fahrzeugs 12 antippen und so zum Ausdruck bringen, dass er die Durchführung eines assistierten Fahrstreifenwechsels wünscht. Der wenigstens eine Fahrtrichtungsanzeiger 22 kann von dem Fahrer des Fahrzeugs 12 demnach insbesondere aktiviert werden, indem der Fahrer des Fahrzeugs 12 den Blinkerhebel durch kurzes Antippen des Blinkerhebels also durch Tippblinken betätigt.

In der UN ECE R79 ist diesbezüglich vorgegeben, dass nach einem derartigen Antippen des Blinkerhebels zunächst während einer Sekunde keine Seitwärtsbewegung des Fahrzeugs 12 stattfinden darf, wobei der assistierte Fahrstreifenwechsel durch das Betätigen des Blinkerhebels in Gang gesetzt wird. Der tatsächliche Fahrstreifenwechsel, also das Einschlagen etwa der Vorderräder des Fahrzeugs 12 derart, dass die Fahrbahnmarkierung in Form der unterbrochenen Linie 18 überfahren wird, hat gemäß der UN ECE R79 innerhalb einer Zeitspanne von 3 Sekunden bis maximal 5 Sekunden nach dem Betätigen oder Antippen des Blinkerhebels zu erfolgen.

Des Weiteren schreibt die UN ECE R79 vor, dass je nach Kategorie des Fahrzeugs 12 das Manöver des Fahrstreifenwechsels innerhalb einer vorbestimmten Zeitspanne abgeschlossen zu sein hat. Handelt es sich bei dem Fahrzeug 12, wie in Fig. 1 beispielhaft gezeigt, um einen Personenkraftwagen, so ist das Fahrmanöver innerhalb von 5 Sekunden zu beenden oder abzuschließen, also innerhalb von 5 Sekunden nachdem das Fahrzeug 12 begonnen hat, die unterbrochene Linie 18 zu überfahren.

Mit anderen Worten ist von dem Fahrerassistenzsystem 10 bei dem assistierten Fahrstreifenwechsel der ersten Art dafür zu sorgen, dass sich das Fahrzeug 12 innerhalb von 5 Sekunden nach diesem Beginnen oder Initiieren des Fahrstreifenwechsels vollständig auf dem Zielfahrstreifen 16 befindet. Während des gesamten Manövers bleibt hierbei der Fahrtrichtungsanzeiger 22 aktiviert. Das entsprechende Blinken des Fahrtrichtungsanzeigers 22 wird von dem Fahrerassistenzsystem 10 des Fahrzeugs 12 jedoch im Anschluss an das Beenden des Fahrmanövers automatisch beendet.

Bei einem assistierten Fahrstreifenwechsel der ersten Art etwa auf einer Autobahn kann demnach vorgesehen sein, dass der Fahrer den Blinkerhebel durch Antippen betätigt und somit die entsprechenden Fahrtrichtungsanzeiger 22 des Fahrzeugs 12 aktiviert, wobei regulatorisch vorgegeben ist, dass frühestens nach einer Sekunde eine Seitwärtsbewegung des Fahrzeugs 12 beginnen darf, wobei der Fahrstreifenwechsel bei aktiviertem Fahrtrichtungsanzeiger 22 innerhalb der vorbestimmten Zeitspanne von 3 Sekunden bis 5 Sekunden nach dem Betätigen des Blinkerhebels zu beginnen beziehungsweise zu initiieren ist.

Jedoch liegt bei einem Fahrstreifenwechsel, bei welchem eine Abzweigung etwa in Form einer Autobahnausfahrt von dem das Fahrerassistenzsystem 10 aufweisenden Fahrzeug 12 befahren werden soll, eine gänzlich andere Situation vor. Dies soll mit Bezug auf Fig. 2 erläutert werden, in welcher ein entsprechende Fahrstreifenwechsel einer zweiten Art veranschaulicht ist.

Bei einem derartigen Fahrstreifenwechsel der zweiten Art ist ein Abfahren des mit dem Fahrerassistenzsystem 10 ausgestatteten Fahrzeugs 12 von dem Ausgangsfahrstreifen 14 auf einen Zweig einer Abzweigung vorgesehen. In der in Fig. 2 beispielhaft gezeigten Situation, in welcher die Abzweigung als Ausfahrt 26, insbesondere in Form einer Autobahnausfahrt, ausgebildet ist, ist der Zweig der Abzweigung als Verzögerungsstreifen 24 ausgebildet. Denn an der Abzweigung in Form der Ausfahrt 26 zweigt von dem Ausgangsfahrstreifen 14 der Verzögerungsstreifen 24 ab.

In Fig. 2 veranschaulichten Situation, in welcher die Abzweigung somit als die Ausfahrt 26 und zwar konkret als die Autobahnausfahrt ausgebildet ist, zweigt der entsprechende Zweig der Abzweigung, welcher als der Verzögerungsstreifen 24 ausgebildet ist, nach rechts von dem Ausgangsfahrstreifen 14 ab. Dementsprechend sind in dieser Fahrsituation die rechten Fahrtrichtungsanzeiger 22 des Fahrzeugs 12 aktiviert, und nicht wie bei dem beispielhaft in Fig. 1 gezeigten Fahrstreifenwechsel der ersten Art die in Fahrtrichtung linken Fahrtrichtungsanzeiger 22. Jedoch gelten die nachfolgend gemachten Ausführungen in analoger Weise, wenn sich das mit dem Fahrerassistenzsystem 10 ausgestattete Fahrzeug 12 in einem Land oder einem Regelungsbereich befindet, in welchem Linksverkehr herrscht beziehungsweise vorgeschrieben ist und somit an der Ausfahrt 26 nach links von dem Ausgangsfahrstreifen 14 abgebogen werden kann.

Bei dem Spurwechsel beziehungsweise Fahrstreifenwechsel an der Abzweigung in Form der Ausfahrt 26 ist nach den etwa in der deutschen Straßenverkehrsordnung geregelten Vorschriften vorgesehen, dass das Verlassen beispielsweise der Autobahn an der Ausfahrt 26 etwa 300 Meter vor der Ausfahrt 26 dem mitfließenden Verkehr anzuzeigen ist. Diese Regelung steht jedoch in Konflikt zu den Regelungen, welche bei Umsetzung allein der Vorgaben der UN ECE R79 zu beachten sind.

Diesen Umständen wird durch das Fahrerassistenzsystem 10 des Fahrzeugs 12 Rechnung getragen. Denn das Fahrerassistenzsystem 10 ist dazu ausgebildet, zwischen dem Fahrstreifenwechsel der ersten Art, welcher beispielhaft in Fig. 1 veranschaulicht ist, und dem Fahrstreifenwechsel der zweiten Art, welcher beispielhaft in Fig. 2 veranschaulicht ist, zu unterscheiden.

Insbesondere kann ein in das Fahrerassistenzsystem 10 des Fahrzeugs 12 implementierter Algorithmus zwischen der ersten Variante oder Art des Fahrstreifenwechsels, nämlich beispielsweise dem normalen Fahrstreifenwechsel auf der Autobahn, und der zweiten Variante beziehungsweise dem Fahrstreifenwechsel der zweiten Art etwa in Form des Fahrstreifenwechsels auf die Ausfahrt 26 beziehungsweise an der Ausfahrt 26 unterscheiden. Dementsprechend ist in das Fahrerassistenzsystem 10 ein Verfahren zur Adaption des Fahrstreifenwechsels an einer Abzweigung wie etwa der Ausfahrt 26, insbesondere Autobahnausfahrt, implementiert.

Demzufolge kann dem Fahrer des Fahrzeugs 12 durch das Fahrerassistenzsystem 10 auch dann ein assistierter Spurwechsel beziehungsweise Fahrstreifenwechsel angeboten werden, wenn es sich bei diesem Fahrstreifenwechsel um ein Abbiegen etwa auf den Verzögerungsstreifen 24 an der Ausfahrt 26 der Autobahn handelt. Dieser assistierte Fahrstreifenwechsel der zweiten Art kann insbesondere als Teilfunktion ausgebildet sein, bei welchem eine Routenführung mittels eines Navigationssystems 28 (vergleiche Fig. 1) des Fahrzeugs 12 aktiviert ist. Aus Gründen der Übersichtlichkeit ist das Navigationssystem 28 des das Fahrerassistenzsystem 10 aufweisenden Fahrzeugs 12 lediglich in Fig. 1 schematisch dargestellt. Der assistierte Fahrstreifenwechsel etwa auf den Verzögerungsstreifen 24 an der Ausfahrt 26 der Autobahn kann somit insbesondere als Teilfunktion des Fahrerassistenzsystems 10 ausgebildet sein, bei welcher die Routenführung mittels des Navigationssystems 28 aktiviert ist, wobei bei aktivierter Routenführung die Route einen Weg zu einem Fahrziel des Fahrzeugs 12 angibt.

Bei dem entsprechenden Verfahren zum Betreiben des Fahrerassistenzsystems 10, welches zwischen dem Fahrstreifenwechsel der ersten Art (vergleiche Fig. 1) und dem Fahrstreifenwechsel der zweiten Art (vergleiche Fig. 2) zu unterscheiden im Stande ist, ist insbesondere vorgesehen, dass der Spurwechsel oder Fahrstreifenwechsel am Beginn des Verzögerungsstreifens 24 durchgeführt wird. Zugleich kann der Fahrer des Fahrzeugs 12 jedoch rechtzeitig, beispielsweise bereits in einer Entfernung von etwa 300 Metern vor der Abfahrt oder Ausfahrt 26 den Blinker setzen beziehungsweise den Fahrtrichtungsanzeiger 22 aktivieren.

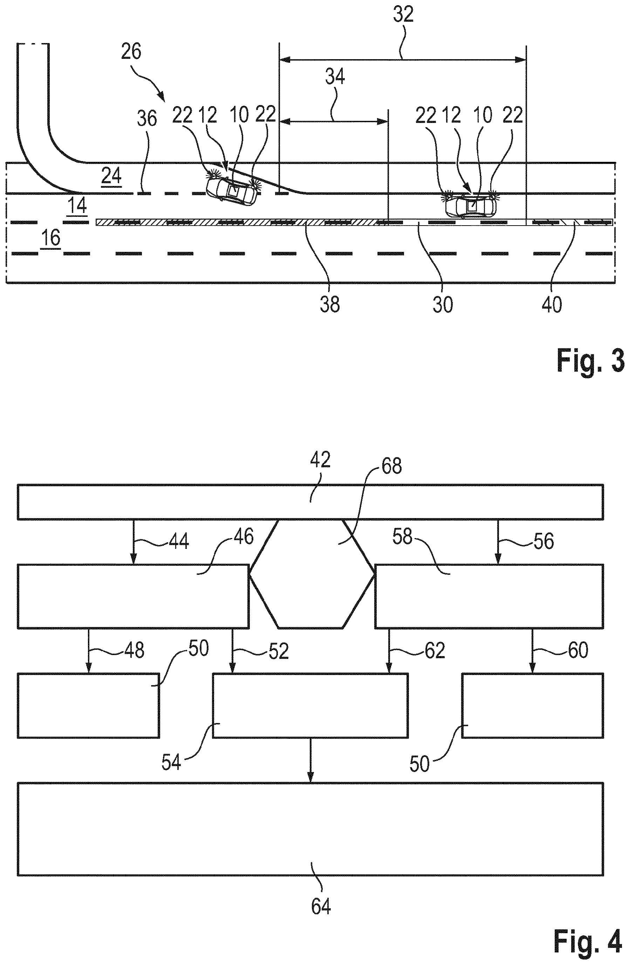

Bei strenger beziehungsweise alleiniger Beachtung der Vorgaben oder Regelungen gemäß der UN ECE R79 würde sich dies jedoch schwierig gestalten, da diese Regelung von anderen Randbedingungen ausgeht. Dies soll mit Bezug auf Fig. 3 erläutert werden.

Beispielsweise soll zur Veranschaulichung davon ausgegangen werden, dass sich das mit dem Fahrerassistenzsystem 10 ausgestattete Fahrzeug 12 mit einer Fahrgeschwindigkeit von 100 km/h fortbewegt. Dementsprechend legt das Fahrzeug 12 knapp 28 Meter pro Sekunde zurück, wenn es mit dieser Fahrgeschwindigkeit auf dem Ausgangsfahrstreifen 14 fährt. Bei Beachtung der Regelung gemäß der UN ECE R79 dürfte der Fahrer des Fahrzeugs 12 den Fahrtrichtungsanzeiger 22 lediglich innerhalb eines vergleichsweise kleinen Bereichs 30 des Ausgangsfahrstreifens 14 betätigen, wobei dieser Bereich 30 in Fig. 3 schematisch veranschaulicht ist.

Denn weil gemäß der UN ECE R79 spätestens 5 Sekunden nach Beginn des Blinkens auf den Verzögerungsstreifen 24 abzubiegen ist, beginnt dieser Bereich 30 in einem Abstand 32 von etwa 140 Metern vor der Ausfahrt 26. Des Weiteren endet der Bereich 30 jedoch bereits in einem Abstand 34 von etwa 85 Metern vor der Ausfahrt 26. Denn die UN ECE R79 sieht vor, dass mindestens 3 Sekunden lang der Fahrtrichtungsanzeiger 22 aktiviert zu sein hat, bevor eine Fahrbahnmarkierung 36 überfahren wird, welche den Ausgangsfahrstreifen 14 von dem Verzögerungsstreifen 24 abgrenzt, wobei diese Fahrbahnmarkierung 36 in Fig. 3 durch eine unterbrochene Linie veranschaulicht ist.

Würde der Fahrer des Fahrzeugs 12 somit erst in einem Abschnitt 38 des Ausgangsfahrstreifens 14, welcher in Fahrtrichtung des Fahrzeugs 12 an den Bereich 30 angrenzt, den Fahrtrichtungsanzeiger 22 des Fahrzeugs 12 aktivieren, so würde dieses Blinken gemäß der UN ECE R79 zu spät erfolgen.

Wenn der Fahrer des Fahrzeugs 12 demgegenüber den Fahrtrichtungsanzeiger 22 bereits aktiviert, wenn sich das Fahrzeug 12 noch in einem weiteren Abschnitt 40 befindet, an welchen sich der Bereich 30 in Fahrtrichtung des Fahrzeugs 12 anschließt, so wäre dieses Blinken gemäß den Regelungen der UN ECE R79 zu früh.

Gemäß der UN ECE R79 dürfte der Fahrer des Fahrzeugs 12 demnach nur in dem sehr kleinen Bereich 30 beziehungsweise in dem sehr kurzen Bereich 30 vor der Ausfahrt 26 den Blinker setzen beziehungsweise den Fahrtrichtungsanzeiger 22 aktivieren. Das gemäß der Straßenverkehrsordnung vorgesehene frühzeitige Setzen des Blinkers beziehungsweise Aktivieren des Blinkers würde daher bei alleiniger Befolgung der Regelungen gemäß der UN ECE R79 keinen automatischen beziehungsweise assistierten Fahrstreifenwechsel erlauben oder zulassen.

In dem Algorithmus, welcher von dem Fahrerassistenzsystem 10 des Fahrzeugs 12 ausgeführt wird, wird jedoch zwischen den beiden Varianten des Fahrstreifenwechsels beziehungsweise den beiden Arten des Fahrstreifenwechsels unterschieden, so dass auch bei dem Fahrstreifenwechsel der zweiten Art und somit beispielsweise bei dem Abfahren des Fahrzeugs 12 von dem Ausgangsfahrstreifen 14 auf den Verzögerungsstreifen 24 das Fahrerassistenzsystem 10 den assistierten Fahrstreifenwechsel bewirken kann.

Der entsprechende Algorithmus soll mit Bezug auf Fig. 4 erläutert werden. Zunächst erfolgt ein Überprüfen 42, ob eine Routenführung des Navigationssystem 28 des Fahrzeugs 12 (vergleiche Fig. 1) aktiv ist. Ist dies der Fall, was in Fig. 4 durch einen ersten Pfeil 44 veranschaulicht ist, so gelangt das Verfahren beziehungsweise der Algorithmus zu einem ersten Block 46. In diesem Block 46 wird geprüft, ob sich das Fahrzeug 12 in einer bestimmten Entfernung vor der Ausfahrt 26 auf der rechten Fahrspur und somit dem Ausgangsfahrstreifen 14 befindet.

Eine Mindestentfernung des Fahrzeugs 12 von der Ausfahrt 26 und eine maximale Entfernung des Fahrzeugs 12 von der Ausfahrt 26 ist hierbei vorzugsweise frei applizierbar beziehungsweise frei vorgebbar. Beispielsweise kann abhängig von der Fahrgeschwindigkeit des Fahrzeugs 12 auf dem Ausgangsfahrstreifen 14 dafür gesorgt werden, dass die in dem ersten Block 46 vorgenommene Überprüfung ausreichend früh erfolgt, so dass der Fahrer den Fahrtrichtungsanzeiger 22 rechtzeitig betätigen kann. In dem Block 46 wird bei aktiver beziehungsweise aktivierter Routenführung vorzugsweise ein Hinweis an den Fahrer des Fahrzeugs 12 ausgegeben, dass dieser den Fahrtrichtungsanzeiger 22 betätigen möge.

Beispielsweise kann auf einer Anzeige des Fahrzeugs 12 an den Fahrer des Fahrzeugs 12 der Hinweis in Textform ausgegeben werden, dass dieser für den Spurwechsel an der Ausfahrt 26 den Blinker betätigen soll. In dem Block 46 wird dann weiter überprüft, ob der Fahrer den Fahrtrichtungsanzeiger 22 tatsächlich aktiviert, etwa durch Antippen des Blinkerhebels oder eines derartigen Bedienelements des Fahrzeugs 12.

Ergibt die Abfrage in dem Block 46, dass der Fahrer des Fahrzeugs 12 dem Hinweis nicht nachkommt, was in Fig. 4 durch einen weiteren Pfeil 48 veranschaulicht ist, so verbleibt das Fahrerassistenzsystem 10 in einem bestimmten Betriebsmodus 50. In diesem Betriebsmodus 50 ist vorliegend lediglich der Fahrstreifenwechsel der ersten Art, etwa in Form des "Fahrstreifenwechsels auf einer Autobahn" zugelassen, wie er beispielhaft mit Bezug auf Fig. 1 erläutert wurde. Folgt als Reaktion auf den Block 46 demgegenüber ein Aktivieren 52 des Fahrtrichtungsanzeigers 22 durch den Fahrer des Fahrzeugs 12, so wird das Fahrerassistenzsystem 10 in einem Spezialmodus 54 betrieben, welcher den Fahrstreifenwechsel der zweiten Art und beispielsweise in Form eines "Fahrstreifenwechsel an einer Ausfahrt" etwa in Form der Ausfahrt 26 gemäß Fig. 2 zulässt.

Ergibt das Überprüfen 42, dass das Navigationssystem 28 des Fahrzeugs 12 (vergleiche Fig. 1) nicht aktiv ist, was in Fig. 4 durch einen weiteren Pfeil 56 veranschaulicht ist, so gelangt das Verfahren beziehungsweise der von dem Fahrerassistenzsystem 10 ausgeführte Algorithmus zu einem zweiten Block 58.

In dem zweiten Block 58 wird überprüft, ob sich das Fahrzeug 12 in einem Abstand zwischen einer bestimmten Mindestentfernung und einer bestimmten maximalen Entfernung vor der Ausfahrt 26 auf dem Ausgangsfahrstreifen 14 befindet. Auch bezüglich dieser Mindestentfernung beziehungsweise dieses Mindestabstands und der maximalen Entfernung beziehungsweise dieses Maximalabstands von der Ausfahrt 26 sind entsprechende Werte vorzugsweise frei applizierbar. Dementsprechend können diese Werte vorzugsweise frei vorgegeben werden, insbesondere in Abhängigkeit von der Fahrgeschwindigkeit des Fahrzeugs 12.

Des Weiteren wird in dem Block 58 überprüft, ob der Fahrer in dem Abstand zwischen der Mindestentfernung und der maximalen Entfernung den Fahrtrichtungsanzeiger 22 aktiviert, etwa durch Betätigen des Blinkerhebels des Fahrzeugs 12. In der in Fig. 2 beispielhaft gezeigten Situation signalisiert der Fahrtrichtungsanzeiger 22 ein Abbiegen nach rechts. Wenn demgegenüber für den beabsichtigten Fahrstreifenwechsel nicht Rechtsverkehr, sondern Linksverkehr herrscht, erfolgt eine Aktivierung des in Fahrtrichtung linken Fahrtrichtungsanzeigers 22 des Fahrzeugs 12.

Ergibt sich in dem Block 58, dass der Fahrer des Fahrzeugs 12 beim sich Annähern an die Ausfahrt 26 nicht den Fahrtrichtungsanzeiger 22 aktiviert, so gelangt das Verfahren entsprechend einem in Fig. 4 gezeigten weiteren Pfeil 60 ebenfalls zu dem Betriebsmodus 50, in welchem das Fahrerassistenzsystem 10 zunächst wieder nur den Fahrstreifenwechsel der ersten Art (vergleiche Fig. 1) zulässt.

Ergibt sich jedoch in dem Block 58, dass der Fahrer des Fahrzeugs 12 vor Erreichen der Ausfahrt 26 den Fahrtrichtungsanzeiger 22 betätigt (vergleiche Fig. 2), so wird ebenfalls der Spezialmodus 54 des Fahrerassistenzsystems 10 aktiviert. Dieser Weg des Verfahrens ist in Fig. 4 durch einen weiteren Pfeil 62 veranschaulicht. In dem Spezialmodus 54 wird eine längere Zeitspanne eines Blinkens des Fahrtrichtungsanzeigers 22 zugelassen als dann, wenn der Betriebsmodus 50 des Fahrerassistenzsystems 10 aktiviert ist.

Dementsprechend wird im Anschluss an das Aktivieren des Spezialmodus 54 in einem weiteren in Fig. 4 dargestellten Block 64 des Algorithmus zum einen die zulässige oder erlaubte Zeitspanne zwischen dem erstmaligen Aktivieren des Fahrtrichtungsanzeigers 22 (etwa durch das Antippen des Blinkerhebels) durch den Fahrer des Fahrzeugs 12 und dem Beginn des Fahrstreifenwechsels erweitert. Dementsprechend wird in dem Block 64 der Fahrtrichtungsanzeiger 22 über die längere Zeitspanne hinweg aktiv gehalten. Dies geschieht deswegen, weil der Algorithmus bei aktiviertem Spezialmodus 54 weiß, dass der Fahrer des Fahrzeugs 12 beabsichtigt, die Abzweigung etwa in Form der Ausfahrt 26 zu nehmen beziehungsweise an der Ausfahrt 26 abzufahren.

In dem Block 64 wird darüber hinaus der automatisierte beziehungsweise assistierte Fahrstreifenwechsel vorzugsweise dann durchgeführt, sobald seitlich neben dem Fahrzeug 12 der Zweig der Abzweigung, gemäß Fig. 2 also etwa der Verzögerungsstreifen 24, vorhanden ist beziehungsweise erkannt wird.

Zum Erkennen des Verzögerungsstreifens 24 seitlich neben dem Fahrzeug 12 kann insbesondere ein Umfeldsensor in Form einer in Fig. 1 beispielhaft gezeigten Kamera 66 des Fahrzeugs 12 verwendet werden. Des Weiteren ist es möglich, anhand von in dem Navigationssystem 28 (vergleiche Fig. 1) des Fahrzeugs 12 vorhandenen Kartendaten 68 (vergleiche Fig. 4) das Vorhandensein des Verzögerungsstreifens 24 seitlich neben dem Fahrzeug 12 zu erkennen. Zusätzlich oder alternativ kann anhand von hochgenauen Kartendaten 68 das Vorhandensein des Verzögerungsstreifens 24 seitlich neben dem Fahrzeug 12 festgestellt werden, welche aus Schwarmdaten generiert wurden und dem Fahrzeug 12 übermittelt worden sind.

Die jeweiligen Kartendaten 68, insbesondere in Form einer in dem Fahrzeug 12 vorhandenen digitalen Karte, sind in Fig. 4 schematisch veranschaulicht. Anhand dieser Kartendaten 68 kann insbesondere der Abstand des Fahrzeugs 12 von der nächsten Ausfahrt 26 beziehungsweise die Entfernung zwischen dem Fahrzeug 12 und der nächsten Ausfahrt 26 ermittelt werden. Des Weiteren ist bei dem Fahrzeug 12 vorliegend eine fahrspurgenaue Navigation ermöglicht, etwa durch Auswertung von Bildern der Kamera 66, insbesondere unter Berücksichtigung der Kartendaten 68. Dementsprechend kann durch das Fahrerassistenzsystem 10 insbesondere festgestellt werden, ob sich das Fahrzeug 12 auf dem Ausgangsfahrstreifen 14 beziehungsweise dem äußerten rechten Fahrstreifen befindet.

In vorteilhafter Weise ermöglicht das anhand von Fig. 4 erläuterte Verfahren in dem Block 64 zum einen ein rechtzeitiges Blinken beziehungsweise rechtzeitiges Aktivieren des Fahrtrichtungsanzeigers 22 und zum anderen den automatisierten oder assistierten Spurwechsel beziehungsweise Fahrstreifenwechsel auch beim Abbiegen an der Abzweigung, also etwa auf den Verzögerungsstreifen 24.

Insgesamt zeigen die Beispiele, wie ein Verfahren zur Adaption einer Strategie bei einem assistierten Fahrstreifenwechsel insbesondere an der Ausfahrt 26 einer Autobahn bereitgestellt werden kann.

### Bezugszeichenliste

- 10: Fahrerassistenzsystem
- 12: Fahrzeug
- 14: Ausgangsfahrstreifen
- 16: Zielfahrstreifen
- 18: Linie
- 20: Fahrweg
- 22: Fahrtrichtungsanzeiger
- 24: Verzögerungsstreifen
- 26: Ausfahrt
- 28: Navigationssystem
- 30: Bereich
- 32: Abstand
- 34: Abstand
- 36: Fahrbahnmarkierung
- 38: Abschnitt
- 40: Abschnitt
- 42: Überprüfen
- 44: Pfeil
- 46: Block
- 48: Pfeil
- 50: Betriebsmodus
- 52: Aktivieren
- 54: Spezialmodus
- 56: Pfeil
- 58: Block
- 60: Pfeil
- 62: Pfeil
- 64: Block
- 66: Kamera
- 68: Kartendaten

## Patentansprüche

1. Verfahren zum Betreiben eines Fahrerassistenzsystems (10) eines Fahrzeugs (12), bei welchem das Fahrerassistenzsystem (10) einen Fahrstreifenwechsel des Fahrzeugs (12) bewirkt, und bei welchem ein Fahrer des Fahrzeugs (12) einen Fahrtrichtungsanzeiger (22) des Fahrzeugs (12) aktiviert,
**dadurch gekennzeichnet, dass**
von dem Fahrerassistenzsystem (10) zwischen einem Fahrstreifenwechsel einer ersten Art, bei welchem ein Abfahren des Fahrzeugs (12) von einem Ausgangsfahrstreifen (14) auf einen weiteren Fahrstreifen (16) vorgesehen ist, und einem Fahrstreifenwechsel einer zweiten Art unterschieden wird, bei welchem ein Abfahren des Fahrzeugs (12) von einem Ausgangsfahrstreifen (14) auf einen Zweig (24) einer Abzweigung (26) vorgesehen ist, wobei bei einem Erkennen eines beabsichtigten Fahrstreifenwechsels der zweiten Art eine längere Zeitspanne eines Blinkens des Fahrtrichtungsanzeigers (22) zugelassen wird als bei einem Erkennen eines beabsichtigten Fahrstreifenwechsels der ersten Art.

2. Verfahren nach Anspruch 1,
**dadurch gekennzeichnet, dass**
das Fahrerassistenzsystem (10) bewirkt, dass zumindest ein Teilbereich des Fahrzeugs (12) im Anschluss an die Zeitspanne, insbesondere unmittelbar im Anschluss an die Zeitspanne, bei weiterhin blinkendem Fahrtrichtungsanzeiger (22) den Ausgangsfahrstreifen (14) verlässt.

3. Verfahren nach einem der vorhergehenden Ansprüche,
**dadurch gekennzeichnet, dass**
das Fahrerassistenzsystem (10) erkennt, dass bei beabsichtigtem Fahrstreifenwechsel der zweiten Art ein Abfahren des Fahrzeugs (12) von dem Ausgangsfahrstreifen (14) auf einen Verzögerungsstreifen (24) einer als Ausfahrt (26) ausgebildeten Abzweigung vorgesehen ist.

4. Verfahren nach Anspruch 3,
**dadurch gekennzeichnet, dass**
das Fahrerassistenzsystem (10) ein Abbiegen des Fahrzeugs (12) auf den Verzögerungsstreifen (24) bewirkt, wenn ein Vorhandensein des Verzögerungsstreifens (24) seitlich neben dem Fahrzeug (12) festgestellt wird.

5. Verfahren nach Anspruch 3 oder 4,
**dadurch gekennzeichnet, dass**
ein Vorhandensein des Verzögerungsstreifens (24) in einer in Fahrtrichtung vorausliegenden Umgebung des Fahrzeugs (12) und/oder seitlich neben dem Fahrzeug (12) mittels wenigstens eines Umfeldsensors (66) des Fahrzeugs (12) und/oder anhand von Kartendaten (68) eines Navigationssystems (28) des Fahrzeugs (12) und/oder anhand von aus Schwarmdaten generierten Kartendaten (68) festgestellt wird.

6. Verfahren nach einem der vorhergehenden Ansprüche,
**dadurch gekennzeichnet, dass**
das Fahrerassistenzsystem (10) anhand von Kartendaten (68) feststellt, dass die Abzweigung (26) in Fahrtrichtung vor dem Fahrzeug (12) angeordnet ist.

7. Verfahren nach einem der vorhergehenden Ansprüche,
**dadurch gekennzeichnet, dass**
von dem Fahrerassistenzsystem (10) geprüft wird, ob ein Navigationssystem (28) des Fahrzeugs (12) aktiviert ist, welches eine Route zu einem Fahrziel des Fahrzeugs (12) angibt, wobei bei aktiviertem Navigationssystem (28) an den Fahrer des Fahrzeugs (12) ein Hinweis ausgegeben wird, vor einem Erreichen der Abzweigung (26) den Fahrtrichtungsanzeiger (22) zu aktivieren.

8. Verfahren nach Anspruch 7,
**dadurch gekennzeichnet, dass**
das Fahrerassistenzsystem (10) in einem den Fahrstreifenwechsel der ersten Art zulassenden Betriebsmodus (50) verbleibt, wenn der Fahrer dem Hinweis nicht nachkommt.

9. Verfahren nach einem der vorhergehenden Ansprüche,
**dadurch gekennzeichnet, dass**
das Fahrzeug (12), bei welchem das Fahrerassistenzsystem (10) den Fahrstreifenwechsel der zweiten Art vornimmt, während einer mindestens 5 Sekunden, insbesondere etwa 5 Sekunden bis etwa 15 Sekunden, andauernden Zeitspanne des Blinkens auf dem Ausgangsfahrstreifen (14) eine Fahrstrecke zurücklegt, bevor das Fahrerassistenzsystem (10) das Abfahren des Fahrzeugs (12) von dem Ausgangsfahrstreifen (14) auf den Zweig (24) der Abzweigung (26) bewirkt.

10. Fahrzeug (12) mit einem Fahrerassistenzsystem (10), welches dazu ausgebildet ist, einen Fahrstreifenwechsel des Fahrzeugs (12) zu bewirken, und mit einem Fahrtrichtungsanzeiger (22), welcher von einem Fahrer des Fahrzeugs (12) aktivierbar ist,
**dadurch gekennzeichnet, dass**
das Fahrerassistenzsystem (10) dazu ausgebildet ist, zwischen einem Fahrstreifenwechsel einer ersten Art, bei welchem ein Abfahren des Fahrzeugs (12) von einem Ausgangsfahrstreifen (14) auf einen weiteren Fahrstreifen (16) vorgesehen ist, und einem Fahrstreifenwechsel einer zweiten Art zu unterscheiden, bei welchem ein Abfahren des Fahrzeugs (12) von einem Ausgangsfahrstreifen (14) auf einen Zweig (24) einer Abzweigung (26) vorgesehen ist, wobei das Fahrerassistenzsystem (10) dazu ausgebildet ist, bei einem Erkennen eines beabsichtigten Fahrstreifenwechsels der zweiten Art eine längere Zeitspanne eines Blinkens des Fahrtrichtungsanzeigers (22) zuzulassen als bei einem Erkennen eines beabsichtigten Fahrstreifenwechsels der ersten Art.

## Claims

1. Method for operating a driver assistance system (10) of a vehicle (12), in which the driver assistance system (10) causes a lane change of the vehicle (12), and in which a driver of the vehicle (12) activates a direction indicator (22) of the vehicle (12), **characterized in that**
the driver assistance system (10) distinguishes between a lane change of a first type, during which provision is made for the vehicle (12) to move from a starting lane (14) to a further lane (16), and a lane change of a second type, during which provision is made for the vehicle (12) to move from a starting lane (14) to a branch (24) of a junction (26), wherein a longer period of time for flashing of the direction indicator (22) is allowed when an intended lane change of the second type is detected than when an intended lane change of the first type is detected.

2. Method according to Claim 1,
**characterized in that**
the driver assistance system (10) causes at least one section of the vehicle (12) to leave the starting lane (14) after the period of time, in particular immediately after the period of time, if the direction indicator (22) is still flashing.

3. Method according to one of the preceding claims, **characterized in that**
the driver assistance system (10) recognizes that, during an intended lane change of the second type, provision is made for the vehicle (12) to move from the starting lane (14) to a deceleration lane (24) of a junction in the form of an exit (26).

4. Method according to Claim 3,
**characterized in that**
the driver assistance system (10) causes the vehicle (12) to turn into the deceleration lane (24) if it is determined that the deceleration lane (24) is present laterally beside the vehicle (12).

5. Method according to Claim 3 or 4,
**characterized in that**
presence of the deceleration lane (24) in an environment of the vehicle (12) ahead in the direction of travel and/or laterally beside the vehicle (12) is determined by means of at least one environmental sensor (66) of the vehicle (12) and/or on the basis of map data (68) from a navigation system (28) of the vehicle (12) and/or on the basis of map data (68) generated from swarm data.

6. Method according to one of the preceding claims, **characterized in that**
the driver assistance system (10) determines, on the basis of map data (68), that the junction (26) is located in front of the vehicle (12) in the direction of travel.

7. Method according to one of the preceding claims, **characterized in that**
the driver assistance system (10) checks whether a navigation system (28) of the vehicle (12) is activated, which navigation system indicates a route to a destination of the vehicle (12), wherein, if the navigation system (28) is activated, a suggestion to activate the direction indicator (22) before reaching the junction (26) is output to the driver of the vehicle (12) .

8. Method according to Claim 7,
**characterized in that**
the driver assistance system (10) remains in an operating mode (50) allowing the lane change of the first type if the driver does not comply with the suggestion.

9. Method according to one of the preceding claims, **characterized in that**
the vehicle (12), in which the driver assistance system (10) performs the lane change of the second type, covers a driving distance in the starting lane (14) during a period of time for flashing that lasts for at least 5 seconds, in particular approximately 5 seconds to approximately 15 seconds, before the driver assistance system (10) causes the vehicle (12) to move from the starting lane (14) to the branch (24) of the junction (26) .

10. Vehicle (12) having a driver assistance system (10), which is designed to cause a lane change of the vehicle (12), and having a direction indicator (22) which can be activated by a driver of the vehicle (12), **characterized in that**
the driver assistance system (10) is designed to distinguish between a lane change of a first type, during which provision is made for the vehicle (12) to move from a starting lane (14) to a further lane (16), and a lane change of a second type, during which provision is made for the vehicle (12) to move from a starting lane (14) to a branch (24) of a junction (26), wherein the driver assistance system (10) is designed to allow flashing of the direction indicator (22) for a longer period of time when an intended lane change of the second type is detected than when an intended lane change of the first type is detected.

## Revendications

1. Procédé pour faire fonctionner un système d'assistance au conducteur (10) d'un véhicule (12), avec lequel le système d'assistance au conducteur (10) provoque un changement de voie de circulation du véhicule (12) et avec lequel un conducteur du véhicule (12) active un indicateur de direction (22) du véhicule (12), **caractérisé en ce que**
le système d'assistance au conducteur (10) différentie entre un changement de voie de circulation d'un premier type, lors duquel il est prévu une sortie du véhicule (12) d'une voie de circulation initiale (14) sur une voie de circulation supplémentaire (16), et un changement de voie de circulation d'un deuxième type, lors duquel il est prévu une sortie du véhicule (12) d'une voie de circulation initiale (14) sur une branche (24) d'une bifurcation (26), une période plus longue d'un clignotement de l'indicateur de direction (22) étant autorisée lors d'une reconnaissance d'un changement de voie de circulation envisagé du deuxième type que lors d'une reconnaissance d'un changement de voie de circulation envisagé du premier type.

2. Procédé selon la revendication 1,
**caractérisé en ce que**
le système d'assistance au conducteur (10) a pour effet qu'au moins une zone partielle du véhicule (12) quitte la voie de circulation initiale (14) à l'issue de la période, notamment directement à l'issue de la période, avec une poursuite du clignotement de l'indicateur de direction (22).

3. Procédé selon l'une des revendications précédentes, **caractérisé en ce que**
le système d'assistance au conducteur (10) reconnaît que lors d'un changement de voie de circulation envisagé du deuxième type, il est prévu une sortie du véhicule (12) de la voie de circulation initiale (14) sur une bande de ralentissement (24) d'une bifurcation configurée en tant que sortie (26).

4. Procédé selon la revendication 3,
**caractérisé en ce que**
le système d'assistance au conducteur (10) provoque une bifurcation du véhicule (12) sur la bande de ralentissement (24) lorsque la présence de la bande de ralentissement (24) latéralement à côté du véhicule (12) est constatée.

5. Procédé selon la revendication 3 ou 4,
**caractérisé en ce que**
une présence de la bande de ralentissement (24) est constatée dans un environnement du véhicule (12) se trouvant à l'avant dans la direction de déplacement et/ou latéralement à côté du véhicule (12) au moyen d'au moins un capteur d'environnement (66) du véhicule (12) et/ou à l'aide de données cartographiques (68) d'un système de navigation (28) du véhicule (12) et/ou à l'aide de données cartographiques (68) générées à partir de données en essaim.

6. Procédé selon l'une des revendications précédentes, **caractérisé en ce que**
le système d'assistance au conducteur (10) constate, à l'aide de données cartographiques (68), que la bifurcation (26) est disposée à l'avant du véhicule (12) dans la direction de déplacement.

7. Procédé selon l'une des revendications précédentes, **caractérisé en ce que**
un contrôle est effectué par le système d'assistance au conducteur (10) afin de vérifier si un système de navigation (28) du véhicule (12) est activé, lequel indique un itinéraire vers une destination de déplacement du véhicule (12), une notification étant délivrée au conducteur du véhicule (12) dans le cas où le système de navigation (28) est activé, l'invitant à activer l'indicateur de direction (22) avant d'atteindre la bifurcation (26).

8. Procédé selon la revendication 7,
**caractérisé en ce que**
le système d'assistance au conducteur (10) reste dans un mode de fonctionnement (50) autorisant le changement de voie de circulation du premier type lorsque le conducteur ne répond pas à la notification.

9. Procédé selon l'une des revendications précédentes, **caractérisé en ce que**
le véhicule (12), avec lequel le système d'assistance au conducteur (10) effectue le changement de voie de circulation du deuxième type, parcourt un trajet sur la voie de circulation initiale (14) pendant une période du clignotement qui dure au moins 5 secondes, notamment d'environ 5 secondes à environ 15 secondes, avant que le système d'assistance au conducteur (10) provoque la sortie du véhicule (12) de la voie de circulation initiale (14) sur la branche (24) de la bifurcation (26) .

10. Véhicule (12) comprenant un système d'assistance au conducteur (10), lequel est configuré pour provoquer un changement de voie de circulation du véhicule (12), et comprenant un indicateur de direction (22) qui peut être activé par un conducteur du véhicule (12),
**caractérisé en ce que**
le système d'assistance au conducteur (10) est configuré pour faire la différence entre un changement de voie de circulation d'un premier type, lors duquel il est prévu une sortie du véhicule (12) d'une voie de circulation initiale (14) sur une voie de circulation supplémentaire (16), et un changement de voie de circulation d'un deuxième type, lors duquel il est prévu une sortie du véhicule (12) d'une voie de circulation initiale (14) sur une branche (24) d'une bifurcation (26), le système d'assistance au conducteur (10) étant configuré pour, lors d'une reconnaissance d'un changement de voie de circulation envisagé du deuxième type, autoriser une période plus longue d'un clignotement de l'indicateur de direction (22) que lors d'une reconnaissance d'un changement de voie de circulation envisagé du premier type.
